# EUROPEAN PATENT APPLICATION

(11) **EP 1 731 034 A1**
(43) Date of publication of application: **13.12.2006**
(21) Application number: 05727151.2
(22) Date of filing: 25.03.2005
(51) Int. Cl.: A01M 29/00

(54) **BEAST AND BIRD REPELLING IMPLEMENT AND METHOD**

(30) Priority: 31.03.2004 JP 2004105897
(71) Applicant: CBC Co., Ltd., Tokyo 104-0052 (JP); Nippon Paint Co., Ltd., Osaka-shi, Osaka 531-8511 (JP); JDS, Uniphase, Corporation, Santa Rosa, CA 9540-77370 (US)
(72) Inventor: YOSHIZAWA, Nobuyasu, . (JP); SHIMIZU, Keiji, . (JP)
(74) Representative: Lorenz, Werner
(86) International application number: PCT/JP2005/005545
(87) International publication number: WO 2005/096813

(57) **Abstract**

A birds and animals repelling instrument (1) according to an aspect of the present invention includes a member (2) (at least one of a coating film member, a plastic compound member, a synthetic leather member, a seal member, a sheet member, and a film member) having at least either a first repelling member (3a) which repels birds and animals using a visual effect of a variation in hue depending on an incident angle of light which variation is caused by a multilayer film structure of the light interference pigment or a second repelling member (3b) which repels birds and animals using a visual effect of a variation in appearance of a rainbow spectrum caused by a microstructure surface of the light diffractive pigment.

## Description

### Technical Field

The present invention relates to an instrument that repels birds and animals, for example, crows, and in particular, to a birds and animals repelling instrument that repels birds and animals using at least either an light interference effect exerted by an light interference pigment or an light diffractive effect exerted by an light diffractive pigment, as well as a method of repelling birds and animals.

### Background Art

Birds and animals have been posing problem within cities. Specifically, birds and animals, for example, crows gather at garbage collection sites in cities and scatter the garbage, as well as their droppings. Moreover, birds and animals damage crops in farms or the like. Various measures have been taken for these problems. For example, Jpn. Pat. Appln. KOKAI Publication 2001-299184 discloses a birds and animals repelling instrument that frightens birds and animals gathering near a garbage collection site; the birds and animals repelling instrument comprises a flexible film having substantially circular optical interfering portions provided at two positions and optical interfering means formed in the optical interfering portions for allowing color light to be obtained on the basis of an light interference effect. However, this invention does not describe or suggest the repellence of birds and animals using an light interference pigment or an light diffractive pigment.

### Disclosure of Invention

It is an object of the present invention to provide a birds and animals repelling instrument which repels birds and animals and which has a simple configuration using, for example, an light interference effect exerted by an light interference pigment or an light diffractive effect exerted by an light diffractive pigment, as well as a method of repelling birds and animals.

To accomplish this object, a first aspect of the present invention provides a birds and animals repelling instrument characterized by comprising a member having, in at least a part of the member, at least either an light interference pigment exerting an light interference effect or an light diffractive pigment exerting an light diffractive effect so that the pigment is externally visible.

A second aspect of the present invention provides the birds and animals repelling instrument according to the first aspect characterized in that the member is at least one of a coating film member, a plastic compound member, a synthetic leather member, a seal member, a sheet member, and a film member.

A third aspect of the present invention provides a birds and animals repelling instrument characterized in that an instrument which repels birds and animals using at least either an light interference effect exerted by an light interference pigment or an light diffractive effect exerted by an light diffractive pigment comprises at least one of a coating film member, a plastic compound member, a synthetic leather member, a seal member, a sheet member, and a film member which has at least either a first repelling member which repels birds and animals using a visual effect of a variation in hue depending on an incident angle of light, which variation is caused by a multilayer film structure of the light interference pigment, or a second repelling member which repels birds and animals using a visual effect of a variation in appearance of a rainbow spectrum caused by a microstructure surface of the light diffractive pigment.

A fourth aspect of the present invention provides a method of repelling birds and animals using a member having, in at least a part of the member, at least either an light interference pigment exerting an light interference effect or an light diffractive pigment exerting an light diffractive effect so that the pigment is externally visible.

### Brief Description of Drawings

FIG. 1 is a conceptual drawing of a birds and animals repelling instrument according to an embodiment of the present invention;
FIG. 2 is a diagram showing the structure of an light interference pigment used in a first repelling member 3a;
FIGS. 3A is a diagram showing the structure of an light diffractive pigment used in a second repelling member 3b;
FIGS. 3B is a diagram showing another structure of an light diffractive pigment used in a second repelling member 3b;
FIGS. 4A is a diagram showing the configuration of a birds and animals repelling net serving as a birds and animals repelling apparatus according to a first example;
FIGS. 4B is a diagram showing another configuration of a birds and animals repelling net serving as a birds and animals repelling apparatus according to a first example;
FIGS. 5A is a diagram showing the configuration of a birds and animals repelling reflector serving as a birds and animals repelling apparatus according to a second example;
FIGS. 5B is a diagram showing another configuration of a birds and animals repelling reflector serving as a birds and animals repelling apparatus according to a second example;
FIGS. 5C is a diagram showing another configuration of a birds and animals repelling reflector serving as a birds and animals repelling apparatus according to a second example;
FIGS. 6A is a diagram showing the configuration of a birds and animals repelling film serving as a birds and animals repelling apparatus according to a third example;
FIGS. 6B is a diagram showing another configuration of a birds and animals repelling film serving as a birds and animals repelling apparatus according to a third example;
FIGS. 7A is a diagram showing the configuration of a birds and animals repelling stand serving as a birds and animals repelling apparatus according to a fourth example;
FIGS. 7B is a diagram showing another configuration of a birds and animals repelling stand serving as a birds and animals repelling apparatus according to a fourth example;
FIGS. 7C is a diagram showing another configuration of a birds and animals repelling stand serving as a birds and animals repelling apparatus according to a fourth example;
FIGS. 8A is a diagram showing the configuration of a birds and animals repelling balloon serving as a birds and animals repelling apparatus according to a fifth example;
FIGS. 8B is a diagram showing another configuration of a birds and animals repelling balloon serving as a birds and animals repelling apparatus according to a fifth example;
FIGS. 8C is a diagram showing another configuration of a birds and animals repelling balloon serving as a birds and animals repelling apparatus according to a fifth example;
FIGS. 8D is a diagram showing another configuration of a birds and animals repelling balloon serving as a birds and animals repelling apparatus according to a fifth example.

### Best Mode for Carrying Out the Invention

An embodiment of the present invention will be described below with reference to the drawings.

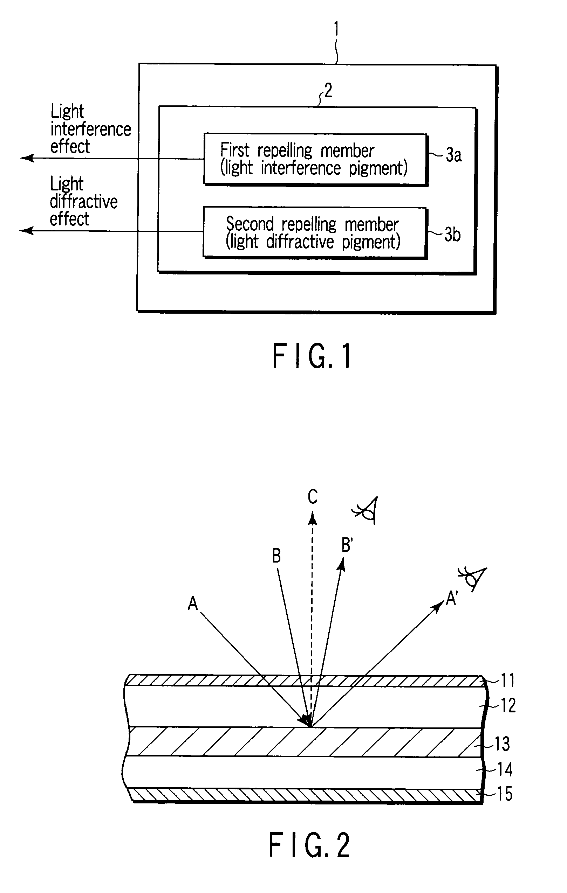

With reference to the conceptual drawing in FIG. 1, description will be given of a birds and animals repelling instrument according to the embodiment of the present invention.

As shown in FIG. 1, a birds and animals repelling instrument 1 repels birds and animals using at least either an light interference effect exerted by an light interference pigment or an light diffractive effect exerted by an light diffractive pigment. The birds and animals repelling instrument 1 comprises a member 2 having at least either a first repelling member 3a which repels birds and animals using a visual effect of a variation in hue depending on the incident angle of light, which variation is caused by the multilayer film structure of the light interference pigment or a second repelling member 3b which repels birds and animals using a visual effect of a variation in appearance of a rainbow spectrum caused by the microstructure surface of the light diffractive pigment. The member 2 used to repel birds and animals may be a coating film member, a plastic compound member, a synthetic leather member, a seal member, a sheet member, a film member, or the like.

These members can be formed into an appropriate shape such as textile, a net, a bar, a line, a sphere, or a shape similar to a bird or an animal. Further, a combination of these members can be subjected to coating, molding, sticking application, or the like.

Available materials include metal, plastics, paper, textile, concrete, or wood. Objects to which the members can be applied include a vehicle, building, a bridge, a road, an electric light stand, and a steel tower.

The coating film member according to the present invention is obtained by forming a coating film using a normal coating method such as spray coating as well as a coating material containing a vehicle in which an light interference pigment exerting an light interference effect or an light diffractive pigment exerting an light diffractive effect is dispersed. Such coating materials include "MAZIORA (registered trade mark)" (commercially available from NIPPON PAINT CO., LTD.).

The vehicle is composed of a coating film forming resin such as an acrylic resin, a polyester resin, an alkyd resin, a fluorine resin, an epoxy resin, a polyurethane resin, or a polyether resin, to which a crosslinking agent such as an amino resin, a (block) polyisocyanade compound, an amine-based compound, a polyamide-based compound, or a polyvalent carboxylic acid is added as required. Moreover, it is possible to add, to the above components, wax, catalysts, an ultraviolet absorber, an antioxidant, a leveling agent, a flow modifier such as silicon or an organic polymer, an anti-sagging agent, a thickner, an anti-foaming agent, a lubricant, or crosslinking organic nanospheres (microgels). The coating material is provided in a form in which the above components are typically dissolved or dispersed in an organic solvent and/or a aquatic solvents including water or the like.

With reference to FIG. 2, description will be given of the structure of the light interference pigment used in the first repelling member 3a.

As shown in FIG. 2, the light interference pigment has a multilayer film structure in which a glass layer 14 is stacked on a semi-transparent absorbing 15 and in which a opaque reflecting layer 13 and a glass layer 12 are stacked on the glass layer 14, with a semi-transparent absorbing 11 stacked on the glass layer 12 as a top layer. The multilayer film structure based on this optical thin film design, that is, an interference structure, exerts an light interference effect that exhibits various colors.

When light is incident on a surface of an light interference pigment with such a structure at a predetermined angle, it passes through the semi-transparent absorbing 11 and the glass layer 12 and is then reflected by a surface of the opaque reflecting layer 13. The light is then emitted via the glass layer 12 and the semi-transparent absorbing 11 at a reflection angle substantially equal to the incident angle. For example, light incident from an entrance position A is emitted from an exit position A'. Light incident from an entrance position B is emitted from an exit position B'. In this case, owing to the light interference effect of the interference structure, a visible color varies depending on the incident angle and reflection angle of light. The first repelling member 3a repels birds and animals using the visual effect of a variation in hue depending on the incident angle of light or the like.

Such light interference pigments include "ChromaFlair (registered trade mark) (manufactured by Flex Products Inc.).

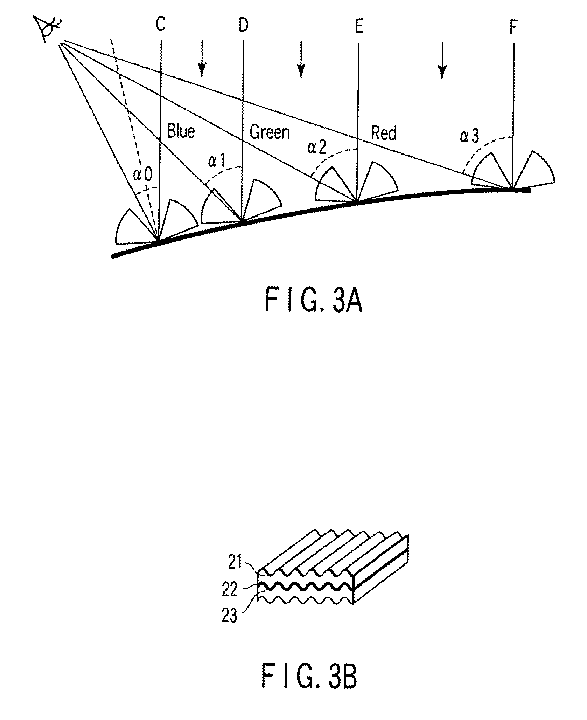

With reference to FIGS. 3A and 3B, description will be given of the structure of the light diffractive pigment used in the second repelling member 3b.

As shown in FIG. 3B, the light diffractive pigment has a multilayer film structure in which a opaque reflecting layer 22 is stacked on a glass layer 23, with a glass layer 21 stacked on the opaque reflecting layer 22. The light diffractive pigment further has a microstructure surface having a size substantially equivalent to the wavelength of visible light. The microstructure surface of the light diffractive pigment can change the appearance of a rainbow spectrum.

As shown in FIG. 3A, when light is incident on a surface of the light diffractive pigment with the above structure, diffraction occurs at a surface of the glass layer 21 to generate a fan-shaped rainbow spectrum on both sides of the incident light on the surface of the pigment. The rainbow spectrum develops colors such as red, yellow, green, blue, and purple. Accordingly, when the rainbow spectrum is seen at a predetermined angle, rainbow coloring is observed. For example, when lights are incident from above in a fixed direction, lights reflected at angles α0, α1, α2, and α3 are viewed at the predetermined angle.

At the angle α0, the reflected light is not located within the fan-shaped rainbow spectrum. Consequently, the rainbow coloring is not observed. However, at the angles α1, α2, and α3, the reflected lights are located within the respective rainbow spectra resulting from the diffraction. Consequently, blue, green, and red coloring is observed at the respective angles.

The second repelling member 3a repels birds and animals using the visual effect of a variation in appearance of the rainbow spectrum caused by the microstructure surface.

Such light diffractive pigments include "SpectraFlair" (registered trade mark) (manufactured by Flex Products Inc.).

On the basis of the technique described above, first to fifth examples will be described below.

The effects of each example correspond to an example of a method of repelling birds and animals according to the present invention.

### (First Example)

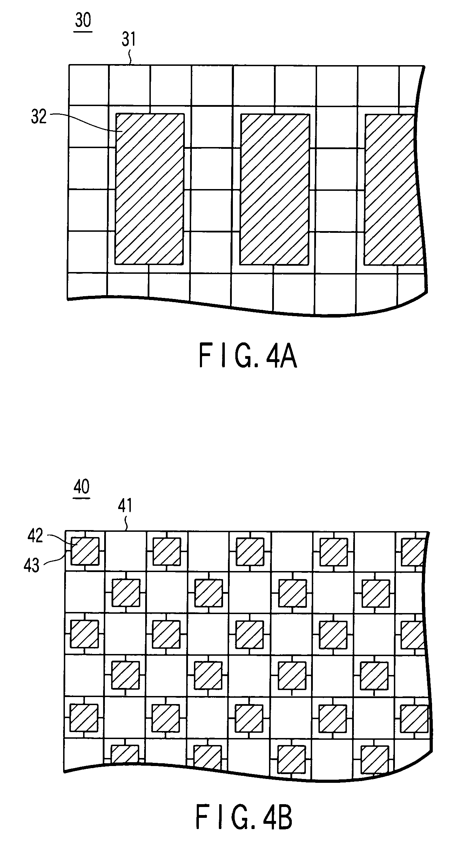

With reference to FIGS. 4A and 4B, description will be given of the configuration of a birds and animals repelling net serving as a birds and animals repelling apparatus according to the first example. The birds and animals repelling net is constructed by bonding, to a net formed of cord members or the like, a synthetic leather member, a plastic compound member, a film member, or the like which consists of at least either the light interference pigment or the light diffractive pigment. The birds and animals repelling net will be described below in detail.

The example shown in FIG. 4A is a birds and animals repelling net 30 into which cord members 31 are weaved. In the birds and animals repelling net 30, a plurality of (in this example, eight) spaces formed in predetermined units are considered to be one area. Then, the repelling member 32, consisting of at least either the light interference pigment or the light diffractive pigment, is bonded to the area. In this case, a plurality of the repelling members 32 can be disposed at predetermined intervals. The mesh of a general birds and animals repelling net is fine, so that the repelling member 32 must be relatively large in area in order to exert a sufficient visual effect. Accordingly, a plurality of spaces are considered to be one area to which each repelling member 32 is bonded.

The first example can be modified as shown in FIG. 4B.

The example shown in FIG. 4B is a birds and animals repelling net 40 into which cord members 41 are weaved. Repelling members 42 are disposed zigzag via fixing portions 43 in respective spaces formed in predetermined units; the repelling members 42 each consist of at least either the light interference pigment or the light diffractive pigment as described previously in detail. This is suitable if the birds and animals repelling net has a relatively large mesh. Even with a fine mesh, a sufficient visual effect is exerted by disposing a plurality of the repelling members 42.

For example, a synthetic leather member, a plastic compound member, a film member, or a textile can be adopted as the repelling members 32 and 42 of the birds and animals repelling nets in FIGS. 4A and 4B; the synthetic leather member, plastic compound member, film member, or textile consists of at least either the light interference pigment or the light diffractive pigment.

According to the above birds and animals repelling net according to the first example, birds and animals can be effectively repelled using the simple configuration in which the repelling members are installed in the existing net.

As improvements in the first example, it is possible to provide a birds and animals repelling net constructed by incorporating at least either the light interference pigment or the light diffractive pigment in a synthetic resin, processing the synthetic resin into yarns, and weaving the yarns into a net, or a birds and animals repelling sheet constructed by weaving the yarns into a textile form.

It is also possible to provide a birds and animals repelling sheet constructed by processing, into a film, a synthetic resin incorporating member in which at least either the light interference pigment or the light diffractive pigment has been incorporated, and then bonding the film to a non-woven cloth, a synthetic fiber cloth, and a natural fiber cloth. It is also possible to provide birds and animals repelling sheet constructed coating or printing at least either the light interference pigment or the light diffractive pigment on a flat plate rubber or synthetic resin or incorporating at least either the light interference pigment or the light diffractive pigment in a rubber or synthetic resin and forming the rubber or synthetic resin into a plane shape, and then weaving the flat plate rubber or synthetic resin or the plane into a textile form.

### (Second Example)

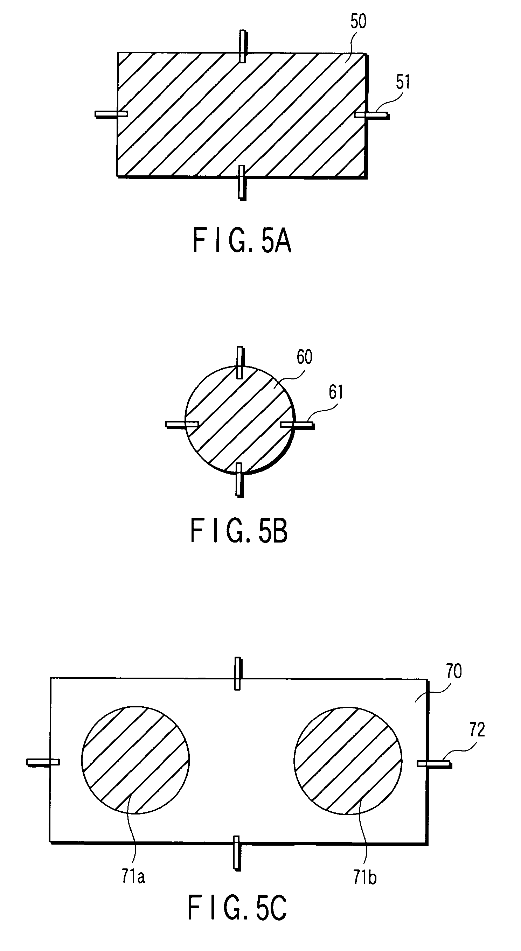

With reference to FIGS. 5A to 5C, description will be given of the configuration of a birds and animals repelling reflector serving as a birds and animals repelling apparatus according to the second example. The birds and animals repelling reflector is constructed by forming a coating film member, synthetic leather member, plastic compound member, film member, or the like consisting of at least either the light interference pigment or the light diffractive pigment, into a predetermined shape, or forming it into a predetermined shape and then bonding the member with the predetermined shape to a support plate. A detailed description will be given below of the configuration and effects of the birds and animals repelling reflector.

The example shown in FIG. 5A is obtained by molding a repelling member 50 such as a coating film member, a synthetic leather member, a plastic compound member, or a film member which consists of at least either the light interference pigment or the light diffractive pigment, into a predetermined shape (in this case, a rectangle) that can be freely fixed to a desired member (place) via fixing portions 51. Similarly, the example shown in FIG. 5B is obtained by molding a repelling member 60 such as a coating film member, a synthetic leather member, a plastic compound member, or a film member which consists of at least either the light interference pigment or the light diffractive pigment, into a predetermined shape (in this case, a circle) that can be freely fixed to a desired member (place) via fixing portions 61. The example shown in FIG. 5C is obtained by molding repelling members 71a and 71b such as coating film members, synthetic leather members, plastic compound members, or film members which consist of at least either the light interference pigment or the light diffractive pigment, into a predetermined shape (in this case, two circles), and then bonding the members with the predetermined shape to a support plate 70 that can be freely fixed to a desired member (place) via fixing portions 72.

The above birds and animals repelling reflector according to the second example can effectively repel birds and animals by mounting it in a desired place.

Materials for the repelling members 50, 60, 71a, and 71b of the reflectors may include, for example, plastic, iron, non-ferrous metal, and film. A coloring method may be a coating of at least either the light interference pigment or the light diffractive pigment, kneading it with a synthetic resin, or printing of it on a synthetic resin. The above coloring may be applied to both or one of the surfaces.

### (Third Example)

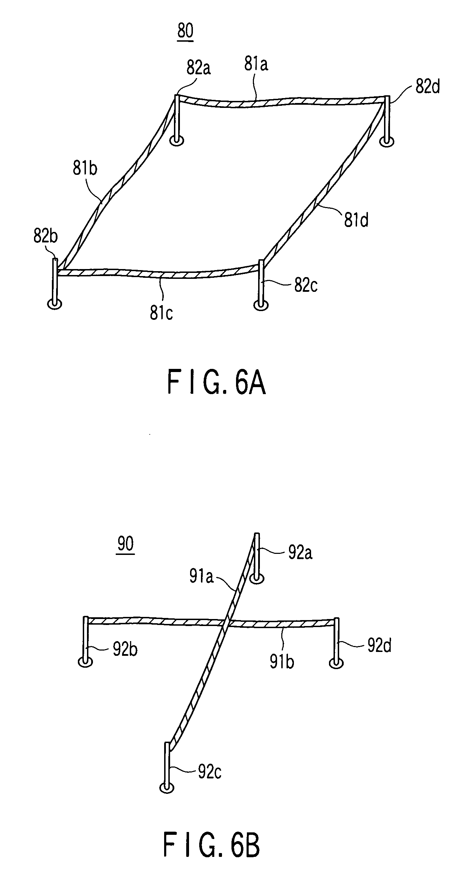

With reference to FIGS. 6A and 6B, description will be given of the configuration of a birds and animals repelling film serving as a birds and animals repelling apparatus according to a third example. The birds and animals repelling film is a plastic film on which at least either the light interference pigment or the light diffractive pigment has been coated or printed. The birds and animals repelling film is attached to a stand to repel birds and animals. A detailed description will be given below of the configuration and effects of the birds and animals repelling film.

In the example shown in FIG. 6A, birds and animals repelling films 81a to 81d are attached to stands 82a to 82b installed, in this example, at four points; at least either the light interference pigment or the light diffractive pigment has been coated or printed on the birds and animals repelling films 81a to 81d. The birds and animals repelling films 81a to 81d are more effectively disposed so as to surround an area in which birds and animals are desirably repelled (for example, a dumping ground, a rice field, and other field such as farm). On the other hand, in the example shown in FIG. 6B, two birds and animals repelling films 91a and 92a are attached to stands 92a to 92d so as to cross each other. In this case, the amount of birds and animals repelling films 91a and 92a required is smaller than that in the example shown in FIG. 6A. Consequently, this example is more economical.

In the examples in FIGS. 6A and 6B, when loosely attached to the stands 82a to 82d or 92a to 92d, the birds and animals repelling films 81a to 81d or 91a and 91b stream in the wind. Of course, this improves the light interference effect and the light diffractive effect.

The above birds and animals repelling film according to the third example can be simply and quickly mounted in a place from which birds and animals are desirably repelled. In spite of its low costs, the birds and animals repelling film can effectively repel birds and animals.

### (Fourth Example)

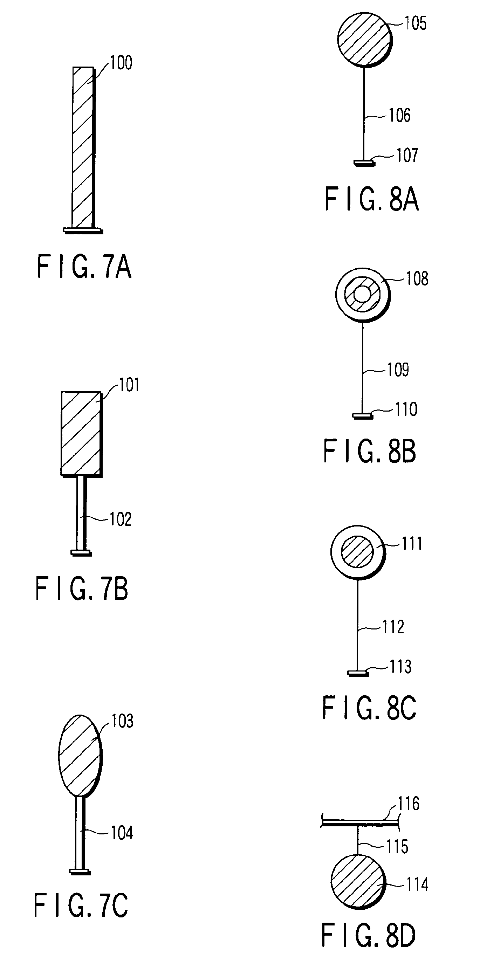

With reference to FIGS. 7A to 7C, description will be given of the configuration of a birds and animals repelling stand serving as a birds and animals repelling apparatus according to the fourth example. The birds and animals repelling stand consists of a member on or in which at least either the light interference pigment or the light diffractive pigment has been coated or plastic molded. Alternatively, the birds and animals repelling stand is constructed by sticking, to iron or the like, a film on which at least either the light interference pigment or the light diffractive pigment has been printed.

A detailed description will be given below of the configuration and effects of the birds and animals repelling stand.

The example shown in FIG. 7A is a birds and animals repelling stand 100 constructed by coating or plastic molding either the light interference pigment or the light diffractive pigment on or in iron, non-ferrous metal, plastic, or the like, or sticking a film on which either the light interference pigment or the light diffractive pigment has been printed, to iron, non-ferrous metal, plastic, or the like. The stand is shaped like a plate or a cylinder.

In the example shown in FIG. 7B, a support member 102 is used to support a reflector 101 constructed by coating or plastic molding either the light interference pigment or the light diffractive pigment on or in iron, non-ferrous metal, plastic, or the like, or a reflector 101 constructed by sticking a film on which either the light interference pigment or the light diffractive pigment has been printed, to iron, non-ferrous metal, plastic, or the like. In this example, the reflector 101 is shaped like a rectangle or a cylinder.

In the example shown in FIG. 7C, a support member 104 is used to support a reflector 103 constructed by coating or incorporating either the light interference pigment or the light diffractive pigment on or in iron, non-ferrous metal, plastic, or the like, or a reflector 103 constructed by bonding a film on which either the light interference pigment or the light diffractive pigment has been printed, to iron, non-ferrous metal, plastic, or the like. In this example, the reflector 103 is shaped like an ellipse, an ellipsoid, or a circular body.

The above birds and animals repelling stand according to the fourth example can be simply and quickly mounted in a place from which birds and animals are desirably repelled. The birds and animals repelling stand can effectively repel birds and animals. The above coating or the like may be applied to both or one of the surfaces. The shape of the reflector is not limited to those described above. Various forms may be adopted.

### (Fifth Example)

With reference to FIGS. 8A to 8D, description will be given of the configuration of a birds and animals repelling balloon serving as a birds and animals repelling apparatus according to the fifth embodiment. The birds and animals repelling balloon is a molding of a film on which at least either the light interference pigment or the light diffractive pigment has been printed.

A detailed description will be given below of the configuration and effects of the birds and animals repelling balloon.

In the example shown in FIG. 8A, a film on which either the light interference pigment or the light diffractive pigment has been printed is molded into the form of a balloon 105, which is then filled with a helium gas or the like. Then, the balloon is fixed to a fixing portion 107 via a yarn member 106 so as to float while maintaining a predetermined height. In this example, at least either the light interference pigment or the light diffractive pigment is printed all over the surface of the balloon 105.

On the other hand, in the example shown in FIG. 8B, a film is molded into a balloon 108; either the light interference pigment or the light diffractive pigment has been printed on the film so as to form a concentric pattern. The balloon 108 is then filled with a helium gas or the like. The balloon 108 is then fixed to a fixing portion 110 via a yarn member 109 so as to float while maintaining a predetermined height. In this example, the concentric pattern is formed on the balloon 105.

In the example shown in FIG. 8C, a film is molded into a balloon 111; either the light interference pigment or the light diffractive pigment has been printed on the film so as to form a circular pattern. The balloon 111 is then filled with a helium gas or the like. The balloon 111 is then fixed to a fixing portion 113 via a yarn member 112 so as to float while maintaining a predetermined height. In this example, the circular pattern is formed on the balloon 105. It is generally said that birds and animals are afraid of circles. Accordingly, the birds and animals repelling balloon can more effectively repel birds and animals.

In the example shown in FIG. 8D, a film on which either the light interference pigment or the light diffractive pigment has been printed is molded into a balloon 114, which is then filled with air. The balloon 114 is then suspended from a fixing portion 116 via a yarn member 115 so as to float while maintaining a predetermined height.

The above birds and animals repelling balloon according to the fifth example can be simply and quickly mounted in a place from which birds and animals are desirably repelled. The birds and animals repelling balloon can effectively repel birds and animals. The above coating or the like may be applied to both or one of the surfaces. The shape of the balloon is not limited to those described above. Various forms may be adopted. Moreover, naturally, the balloon may be provided with a stand-like foot as shown in FIGS. 7B and 7C instead of floating using a helium gas or being filled with air.

The embodiment and first to fifth examples have been described. The embodiment can provide a birds and animals repelling instrument which repels birds and animals and which has a simple configuration using, for example, the light interference effect exerted by the light interference pigment and the light diffractive effect exerted by the light diffractive pigment.

### Industrial Applicability

Naturally, the present invention is not limited to the above first to fifth examples. Various modifications or changes may be made to the examples without departing from the spirit of the present invention.

For example, the present invention can be implemented as a molding which is shaped like a bird or an animal, for example, a bird to be repelled and which has been coated with at least either the light interference pigment or the light diffractive pigment.

The present invention can also be implemented as a seal member which can be sticked to various places and which is constructed by applying an adhesive to a back surface of a film or the like on which at least either the light interference pigment or the light diffractive pigment has been coated or printed. Such a seal member can be simply bonded to a place from which the user desired to repel birds and animals. Consequently, the seal member is suitable for simple use.

Moreover, for example, a plastic bucket or a garbage container can be simply and inexpensively adapted to repel birds and animals by molding a plastic compound member or subjecting a coated or printed film to in-mold decorating (for example, placing a colored film in a half of a molding machine for molding and coloring only one side of the molding).

## Claims

1. A birds and animals repelling instrument **characterized by** comprising a member having, in at least a part of the member (2), at least either an light interference pigment exerting an light interference effect or an light diffractive pigment exerting an light diffractive effect so that the pigment is externally visible.

2. The birds and animals repelling instrument according to claim 1, **characterized in that** the member (2) is at least one of a coating film member, a plastic compound member, a synthetic leather member, a seal member, a sheet member, and a film member.

3. A birds and animals repelling instrument **characterized by** comprising an instrument which repels birds and animals using at least either an light interference effect exerted by an light interference pigment or an light diffractive effect exerted by an light diffractive pigment, and
the instrument comprises at least one of a coating film member, a plastic compound member, a synthetic leather member, a seal member, a sheet member, and a film member which has at least either a first repelling member (3a) which repels birds and animals using a visual effect of a variation in hue depending on an incident angle of light which variation is caused by a multilayer film structure of the light interference pigment or a second repelling member (3b) which repels birds and animals using a visual effect of a variation in appearance of a rainbow spectrum caused by a microstructure surface of the light diffractive pigment.

4. A method of repelling birds and animals using a member having, in at least a part of the member (2), at least either an light interference pigment exerting an light interference effect or an light diffractive pigment exerting an light diffractive effect so that the pigment is externally visible.
